# EUROPEAN PATENT SPECIFICATION

(11) **EP 2 420 432 B1**
(45) Date of publication and mention of the grant of the patent: **24.10.2012**
(21) Application number: 11177647.2
(22) Date of filing: 16.08.2011
(51) Int. Cl.: B62D 25/02, B62D 25/04, B62D 25/06, B62D 25/20

(54) **Side vehicle body structure**
Seitliche Fahrzeugkarosseriestruktur
Structure latérale de carrosserie de véhicule

(30) Priority: 17.08.2010 JP 2010182324
(43) Date of publication of application: 22.02.2012
(73) Proprietor: Honda Motor Co., Ltd., Tokyo 107-8556 (JP)
(72) Inventor: Asano, Sadayuki, Saitama, 351-0193 (JP); Imamura, Shogo, Saitama, 351-0193 (JP); Masuta, Noriaki, Saitama, 351-0193 (JP); Hattori, Hiroyuki, Saitama, 351-0193 (JP)
(74) Representative: Prechtel, Jörg

(56) References cited:
- DE-A1-102007 053 353
- US-A- 5 671 968
- US-A- 6 086 141
- US-A- 6 139 094
- US-A1- 2001 002 760
- US-A1- 2005 023 862
- US-A1- 2007 102 964

## Description

The present invention relates to side vehicle body structures in which left and right side bodies are fixedly joined with each other via a front floor cross member and roof arch.

Japanese Patent No. 3637141 (hereinafter referred to as "the prior patent literature"), for example, discloses a side vehicle body structure in which a center pillar, provided on each of the left and right sides of a vehicle and extending vertically between front and rear doors of the vehicle, is fixedly joined to a roof side rail located over the center pillar and to a side sill located under the center pillar. In the side vehicle body structure disclosed in the prior patent literature, a side-sill reinforcing member, provided within the side sill, is divided into front and rear parts and includes a joint section having a lower end portion of the center pillar fixedly joined thereto, and a section having no side-sill reinforcing member therein (i.e., reinforcement-lacking section) is provided over a predetermined range preceding and succeeding the joint section. At the time of a lateral collision, the side sill starts bending inwardly at the reinforcement-lacking section, in response to which the center pillar pivots inwardly about the neighborhood of a joint section between the center pillar and the roof side rail. In this manner, a lateral collision impact can be absorbed in the side vehicle body structure disclosed in the prior patent literature.

With the side vehicle body structure disclosed in the prior patent literature, however, the strength of the side-sill reinforcing member would be partly insufficient due to the provision of the reinforcement-lacking section, and thus, the side sill would present a poor strength against frontal, rear and lateral collisions.

US 5671968 discloses a similar structure.

In view of the foregoing prior art problems, it is an object of the present invention to provide an improved side vehicle body structure which can appropriately absorb a collision impact at the time of frontal, rear and lateral collisions and achieve an increased strength of the vehicle body.

In order to accomplish the above-mentioned object, the present invention provides an improved side vehicle body structure including left and right side bodies constituting left and right walls of a passenger compartment, which comprises: a front floor cross member extending in a left-right direction of the vehicle to interconnect respective longitudinally-middle portions of left and right side sills constituting lower end edges of the left and right side bodies, the front floor cross member including a front floor cross member stiffener, each of the left and right side sills including a side sill stiffener; and a roof arch extending in the left-right direction of the vehicle to interconnect upper ends of left and right center pillars extending upward from the longitudinally-middle portions of the left and right side sills, each of the left and right center pillars including a center pillar stiffener having upper and lower center pillar stiffener members. The roof arch, the upper center pillar stiffener members of the left and right center pillars, the side sill stiffeners of the left and right side sills and the front floor cross member stiffener are each formed by die quenching of a steel plate. The lower center pillar stiffener members of the left and right center pillars are each plastically formed of a steel plate having a strength smaller than a strength that would be obtainable by die quenching of the steel plate. Further, the front floor cross member stiffener, the upper and lower center pillar stiffener members of the left and right center pillars and the roof arch are disposed in an annular configuration to thereby provide an annular framework, as viewed in front elevation of the vehicle compartment.

In the annular framework of the side vehicle body structure of the present invention, the lower center pillar stiffener members of the left and right center pillars, which are not among the members formed by the die quenching (hot stamping), are each a steel plate of a small strength (i.e., ordinary high-tensile steel plate). As a load (impact) is externally input to one of the left and right side bodies (left and right side surfaces) of the vehicle, the lower center pillar stiffener member of ordinary high-tensile steel plate, corresponding to the one side body, first deforms, ahead of others, toward beneath a seat cushion section provided within the passenger compartment, in response to which other elements connected to the lower center pillar stiffener member are advantageously induced to deform toward beneath the seat cushion section. The side sill stiffener member of each of the left and right side sills can achieve an increased strength against a load (impact) input to the front or rear surface of the vehicle. In the aforementioned manner, the side vehicle body structure of the present invention can achieve an increased strength of the vehicle body against loads (collision loads) input to the front, rear and side surfaces of the vehicle.

Preferably, each of the left and right center pillars includes an upper section formed in a closed sectional shape with the upper center pillar stiffener member and an inner center pillar member facing the passenger compartment and a lower section formed in a closed sectional shape with the lower center pillar stiffener member and the inner center pillar member, and the roof arch is fixedly joined at opposite end portions thereof to the inner center pillar members of the left and right center pillars via corner brackets. Thus, as a load is externally input to one of the left and right side bodies, the lower center pillar stiffener member of the corresponding center pillar becomes a starting point of deformation to collapse toward the interior (hollow interior) of the closed sectional shape ahead of other elements.

Preferably, as viewed in side elevation of the vehicle, the lower center pillar stiffener member of each of the left and right center pillars overlaps a seat cushion section of a front seat disposed within the passenger compartment. Thus, as a load is input to one of the left and right side bodies, the lower center pillar stiffener member corresponding to the one side body advantageously deforms toward beneath the seat cushion section.

Preferably, the front floor cross member is formed in a closed sectional shape with the front floor cross member stiffener and a front floor cross member body, and only the front floor cross member body is fixedly joined at each of opposite ends thereof to the inner side sill member that defines a closed sectional shape in conjunction with the side sill stiffener of a corresponding one of the left and right side sills. Further, opposite ends of the front floor cross member stiffener are each spaced from the inner side sill member of the corresponding side sill to form a space therebetween. Thus, each end portion of the front floor cross member body, fixedly joined to the inner side sill member of one of the left and right side sills, is allowed to readily deform, which can thereby induce the lower center pillar stiffener member to deform toward beneath the seat cushion section.

Preferably, the side vehicle body structure of the present invention further comprises a partitioning and reinforcing member provided in each of the left and right side sills for partitioning and reinforcing the side sill. Thus, as a load is input to one of the side bodies, the input load can be dispersed to the partitioning and reinforcing member of the corresponding side sill, so that this arrangement can more reliably prevent collapsing deformation of the side sill. As a result, the partitioning and reinforcing member can transmit the input load to the end portion of the front floor cross member body via the inner side sill member without substantively attenuating the load, thereby more reliably promoting compressive deformation of the end portion of the front floor cross member body. Namely, this arrangement can prevent collapsing deformation of the hollow side sill into the interior of the side sill itself.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will be described in detail below, by way of example only, with reference to the accompanying drawings, in which:
Fig. 1 is a perspective view showing an embodiment of a side vehicle body structure of the present invention;
Fig. 2 is a side view of the embodiment of the side vehicle body structure of the present invention;
Fig. 3 is a sectional view of the embodiment of the side vehicle body structure taken along line 3 ― 3 of Fig. 2;
Fig. 4 is a sectional view of the embodiment of the side vehicle body structure taken along line 4 ― 4 of Fig. 2;
Fig. 5 is a view taken in a direction of arrow 5 of Fig. 1;
Fig. 6 is a view taken in a direction of arrow 6 of Fig. 5;
Fig. 7 is a sectional view of the embodiment of the side vehicle body structure taken along line 7 ― 7 of Fig. 6;
Fig. 8 is a sectional view of the embodiment of the side vehicle body structure taken along line 8 ― 8 of Fig. 6;
Fig. 9 is a perspective view showing the embodiment of the side vehicle body structure with a front floor cross member fixedly joined to a side sill;
Fig. 10 is a perspective view showing a partitioning/reinforcing member disposed within the side sill;
Fig. 11 is a sectional view of taken along line 11 — 11 of Fig. 9; and
Fig. 12 is a sectional view of taken along line 12 — 12 of Fig. 9.

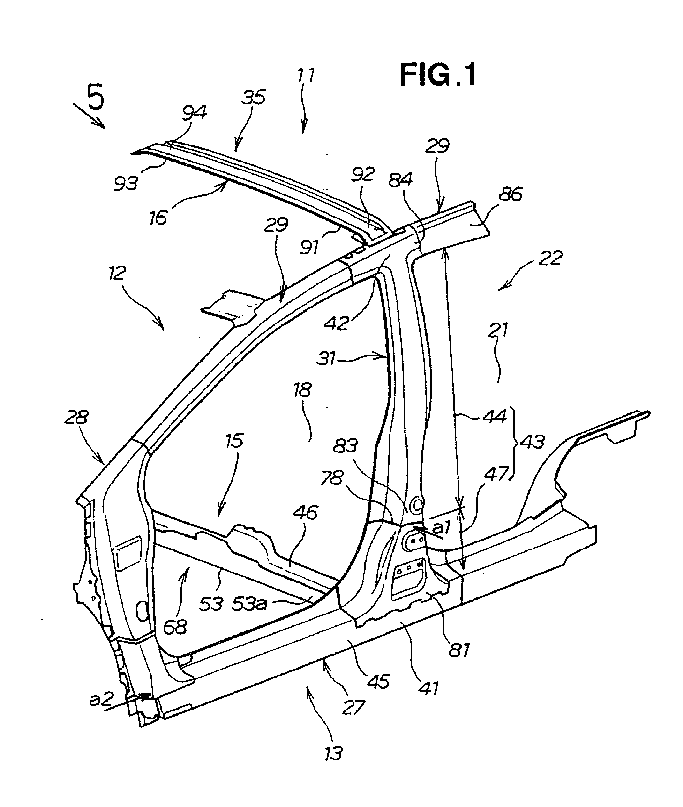

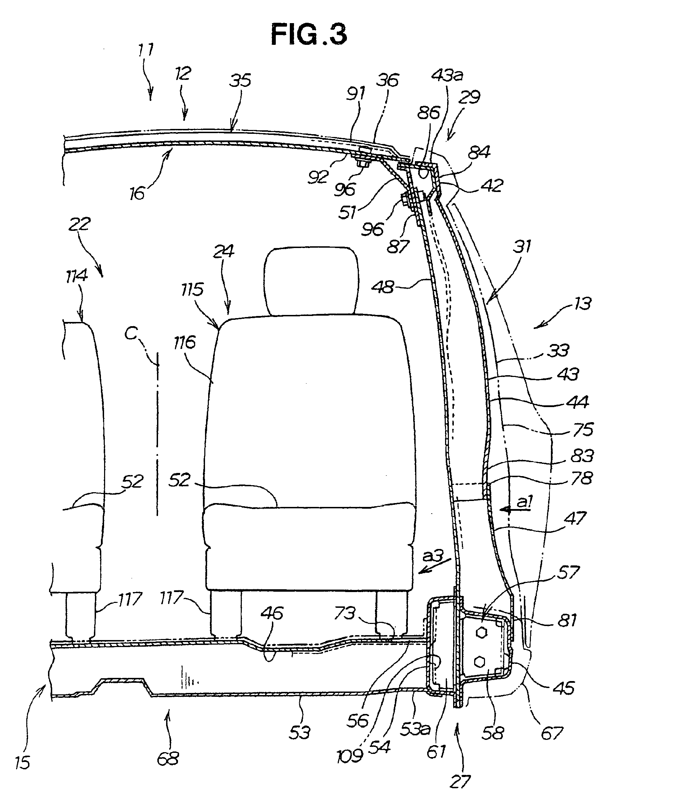

Reference is now made to Fig. 1 showing in perspective an embodiment of a side vehicle body structure of the present invention employed in a vehicle 11, in which a left side body 13 and right side body (not shown) of a vehicle body 12 are fixedly joined with each other via a front floor cross member 15 located thereunder and a roof arch 16 located thereover. The side vehicle body structure is constructed in substantial left-right symmetry about a centerline C (Fig. 3) of the vehicle body 12; that is, the left side body 13 and the right side body are substantially symmetrical to each other about the longitudinal centerline C. Thus, the following describe the embodiment of the side vehicle body structure mainly in relation to the left side body 13.

As shown in Figs. 1 to 3, the vehicle 11, which is for example a four-door, right-steering-wheel type vehicle, includes front and rear doorways 18 and 21 provided in the left side body 13, passenger compartment 22, and front and rear seats 24 and 25 provided in the passenger compartment 22. Reference numeral 35 represents a roof including the roof arch 16, and 36 represents a roof panel.

The left side body 13 includes a side sill 27 constituting a lower frame of the front and rear doorways 18 and 21 and constituting lower end edges of the left and right side bodies, a front pillar 28, a roof side rail 29 constituting an upper frame of the front and rear doorways 18 and 21, a center pillar 31, and a rear pillar 32.

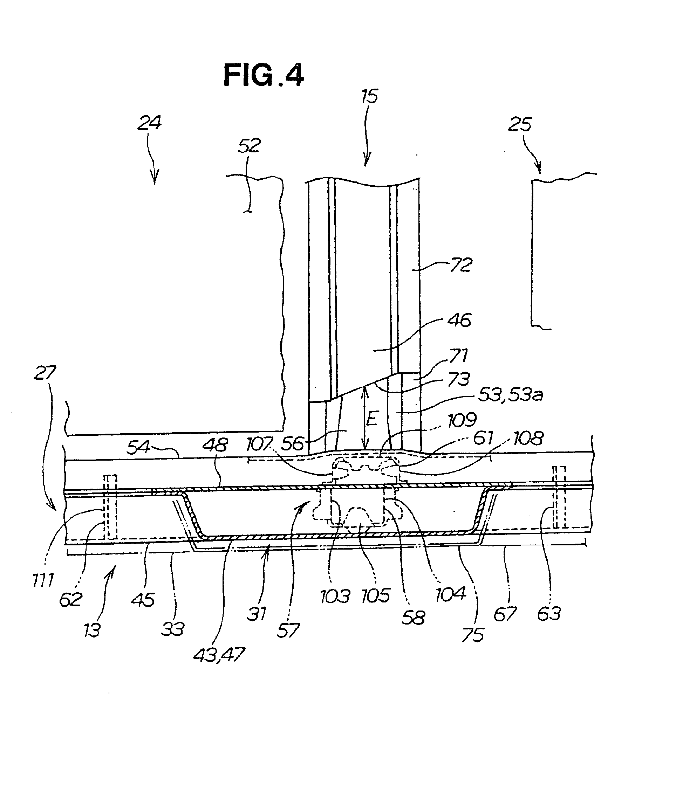

The left side body 13 includes an outer side panel 33 (Figs. 3 and 4) constituting an outer surface of the side sill 27, front pillar 28, center pillar 31 and rear pillar 32, only part of the outer side panel 33 is indicated by two-dot-dash line. The right side body (not shown) is constructed similar to the left side body 13.

Now, details of the embodiment of the side vehicle body structure will be described with reference to Figs. 1 to 12. The side vehicle body structure includes the left side body 13 constituting a left side wall of the passenger compartment 22, the right side body constituting a right side wall of the passenger compartment 22, a right side wall of the passenger compartment 22, the front floor cross member 15 extending in a with (or left-right) direction of the vehicle to interconnect longitudinally-middle portions 41 of the side sills 27 of the left and right side bodies 13 (left and right side sills 27), and the roof arch 16 extending in the with (or left-right) direction of the vehicle to join together upper end portions 42 of the center pillars 31 of the left and right side bodies (i.e., left and right center pillars 31) extending upward from the middle portions 41.

The roof arch 16, upper center pillar stiffener member 44 of a center pillar stiffener 43 (Fig. 1) of the center pillars 31, side sill stiffener 45 of the side sill 27 and front floor cross member stiffener 46 of the front floor cross member 15 are each a super-high-tensile-strength workpiece formed by die quenching of a steel plate, i.e. by a die quench (or hot stamp) process in which a steel plate is heated and plastically formed with a die, attached to a press device, and simultaneously cooled or quenched by contact with the die to be thereby quenched (see Japanese Industrial Standards (JIS)).

A lower center pillar stiffener member 47, which is the remaining part of the center pillar stiffener 43, is formed by cold pressing a steel plate, which has a strength smaller than a strength obtainable by die quenching of the steel plate.

The front floor cross member stiffener 46, left and right center pillar stiffeners 47, upper and lower center pillar stiffener members 44 and 47 of the left and right center pillars 31 and roof arch 16 are arranged or disposed in an annular configuration as viewed in front elevation of the passenger compartment 22 (i.e., as shown in Fig. 3).

The workpieces (hot stamped workpieces) obtained by the die quench (or hot stamp) process in the instant embodiment are each a workpiece of super-high-tensile-strength steel having a tensile strength of 980 Mpa or over that is greater than tensile strengths (e.g., 590 Mpa) of the lower center pillar stiffener member 47, inner center pillar member 48, front floor cross member 15 and inner side sill member 54.

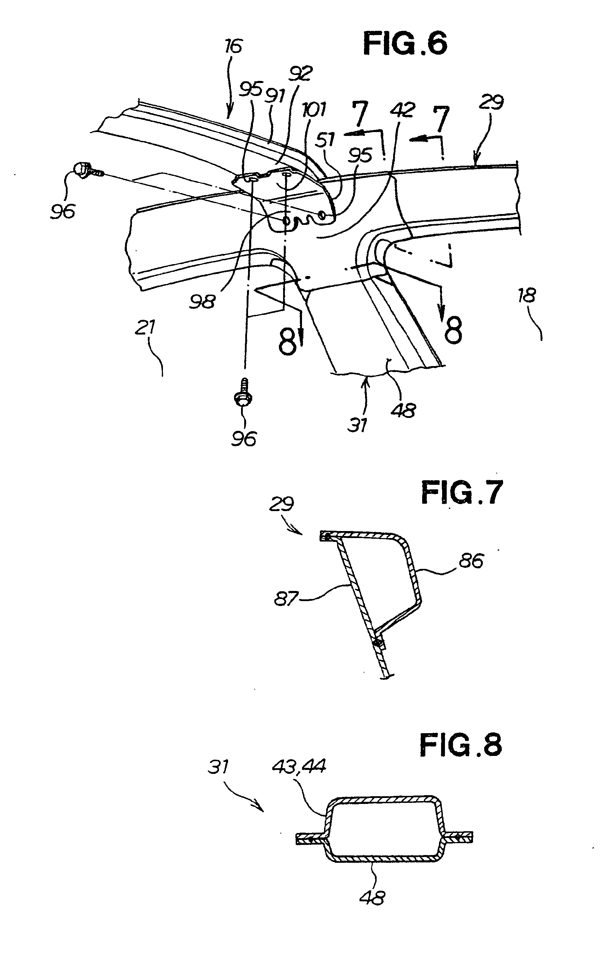

The center pillar 31 has an upper section formed in a closed sectional shape with the upper center pillar stiffener member 44 and inner center pillar member 48, facing the passenger compartment 22, as shown in Fig. 8, and a lower section formed in a closed sectional shape with the lower center pillar stiffener member 47 and inner center pillar member 48 as shown in Fig. 4.

As shown in Figs. 3 and 6, the roof arch 16 are fixedly joined at its opposite end portions to the inner center pillar members 48 of the left and right center pillars 31 via corner brackets 51 with an inner roof side rail member 87 sandwiched between each of the inner center pillar members 48 and the corresponding corner bracket 51.

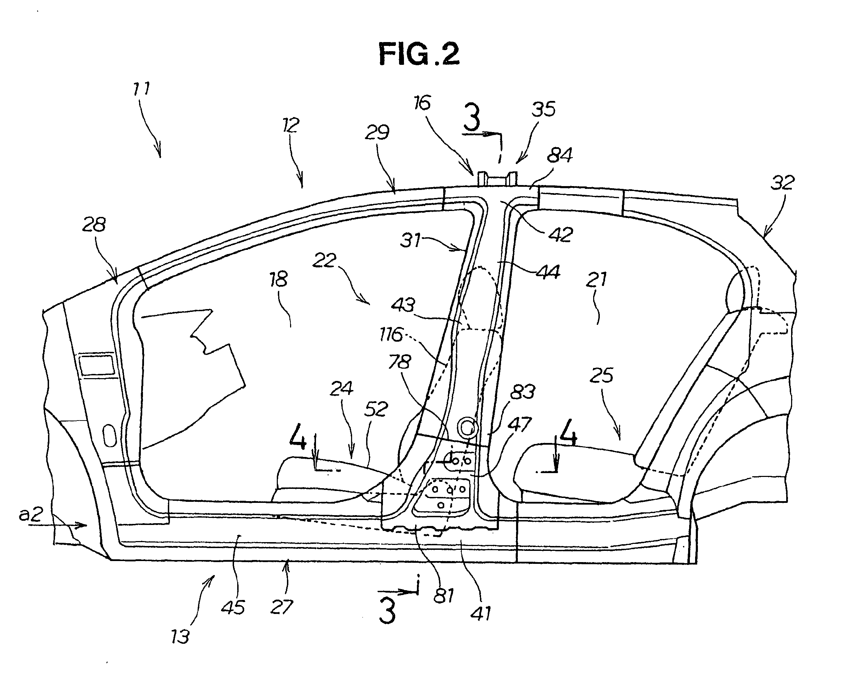

As viewed in side elevation of the vehicle 11 (i.e., as shown in Fig. 2), the lower center pillar stiffener member 47 overlaps a seat cushion section 52 of the front seat 24 provided within the passenger compartment 22.

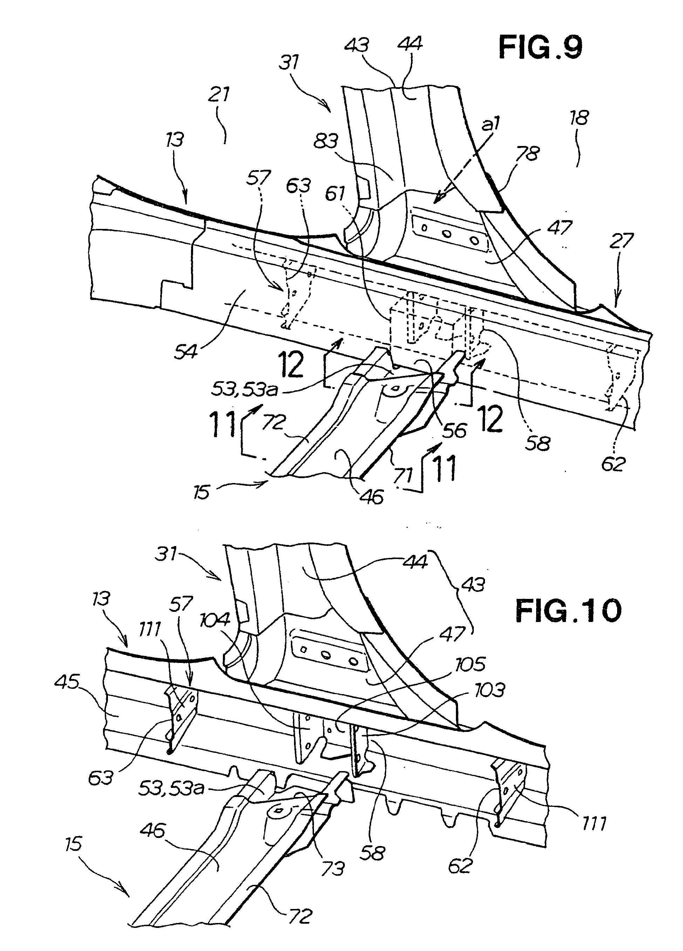

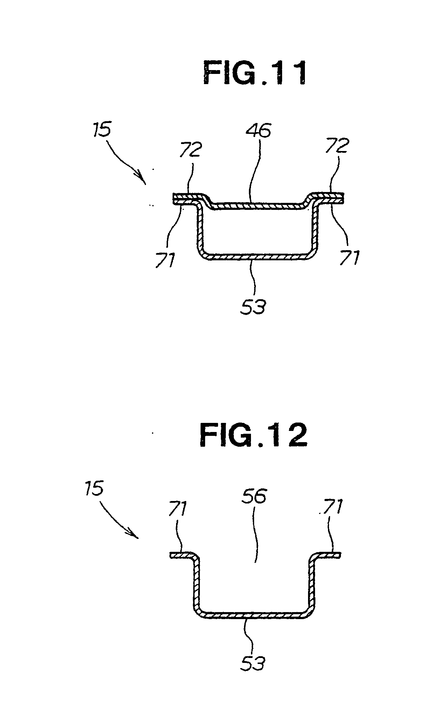

The front floor cross member 15 has a closed sectional shape defined by the front floor cross member stiffener 46 and front floor cross member body 53 as shown in Fig. 11, and only the front floor cross member body 53 is fixedly joined at each of its opposite ends to the inner side sill member 54 that defines a closed sectional shape (Fig. 3) in conjunction with the side sill stiffener 45, as shown in Figs. 4 and 9.

The front floor cross member stiffener 46 is spaced from the inner side sill member 54 of each of the left and right side sills by a distance (average distance) E to define a space 56, as shown in Fig. 4.

A partitioning and reinforcing member 57 is provided within the side sill 27, as shown in Figs. 4, 9 and 10. The portioning and reinforcing member 57 includes an outer bulkhead 58, inner bulkhead 61, front bulkhead 62 and rear bulkhead 63.

As shown in Figs. 3 and 4, the side sill 27 comprises an outer side sill member 67, inner side sill member 54 and side sill stiffener 45 that is formed by the die quench (hot stamp) process. The side sill stiffener 45 is provided, along a substantially full length of the side sill 27, in an interior space (closed sectional shape), defined by the outer side sill member 67 and inner side sill member 54, in such a manner as to divide the interior space into two interior space regions, and the side sill stiffener 45 constitutes an intermediate layer of the side sill 27.

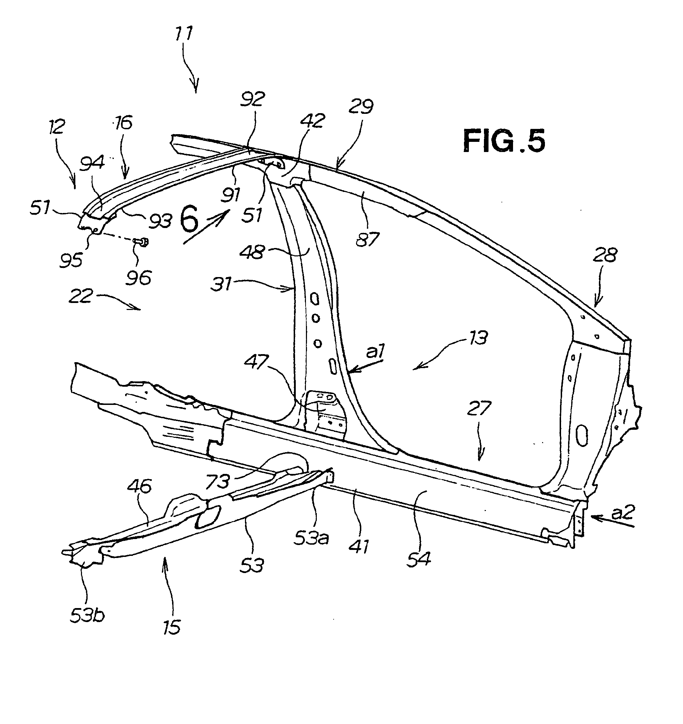

An underbody 68 is fixedly joined to the inner side sill member 54. The front floor cross member 15 of the underbody 68 is fixedly joined to the left and right side sills 2 only at opposite end portions 53a and 53b (Fig. 5) of the front floor cross member body 53. The opposite end portions 53a and 53b (Fig. 5) of the front floor cross member body 53 are also opposite end portions of the front floor cross member 15. Further, the distance (average distance) E at each of the end portions 53a and 53b is intended to function as a collapsing region.

Further, the front floor cross member body 53 has a channel cross-sectional shape, and opposite flanges 71, formed integrally with the body 53, are fixedly joined to the front floor cross member stiffener 46.

The front floor cross member stiffener 46 has a generally band-like shape and has opposite joining margins 72 laid over and welded with the flanges 71 of the front floor cross member body 53. Each of opposite end surfaces 73 of the front floor cross member stiffener 46 is spaced from the longitudinally-middle portion 41 of the corresponding side sill 27 connected to the center pillar 31, rather than being joined to the side sill 27.

Each of the left and right center pillars 31 comprises three main members: an outer center pillar member 75 of the outer side panel 33; the inner center pillar member 48; and the center pillar stiffener 43. The inner center pillar member 48 extends through the side sill 27.

The center pillar stiffener 43 is provided in an interior space, defined by the outer center pillar member 75 and the inner center pillar member 48, in such a manner as to divide the interior space into two space regions and constitutes an intermediate layer of the center pillar 31. Further, the center pillar stiffener 43 has a hat-like or U sectional shape as shown in Figs. 4, 8 and 10 and extends from the roof side rail 29 to the side sill 27 as shown in Fig. 3. Further, the center pillar stiffener 43 comprises two members: the upper center pillar stiffener member 44 formed by the above-mentioned die quench (hot stamp) process; and the lower center pillar stiffener member 47.

The lower center pillar stiffener member 47 has an upper-end joint section 78 laid over and joined to the outer surface of a lower end portion of the upper center pillar stiffener member 44, and a lower-end joint section 81 joined to the outer surface of the side sill 27. The upper center pillar stiffener member 44 has a lower-end joint section 83 joined with the lower center pillar stiffener member 47, and a roof joint section 84 joined to the roof side rail 29.

The roof side rail 29 of the left and right side bodies 13 (i.e., left and right roof side rails 29) includes an outer roof side rail member 86 and an inner rood side rail member 87 that together define a closed sectional shape of the roof side rail 29 as shown in Figs. 3 and 7. The roof arch 16 is fixedly connected at opposite ends to longitudinally-middle portions of the left and right rood side rails 29.

As shown in Figs. 1, 3, 5 and 6, the roof arch 16 has a channel sectional shape, and it has a fastening section 92 at one end portion 91 portion thereof for fastening thereto the corner bracket 51 and a similar fastening section 94 at another end portion 93 thereof. The one end portion 91 has an upper surface in generally the same plane as an upper surface of an end portion 43a of the center pillar stiffener 43 of the left center pillar. Similarly, the other end portion 93 has an upper surface in generally the same plane as an upper surface of an end portion of the center pillar stiffener of the right center pillar. Each of the fastening sections 92 and 94 has a fastening hole 95 having a diameter corresponding to a diameter of a bolt 96.

The roof side arch 16 is fixedly joined at each of the opposite end portions to the upper end portion 42 of the center pillar 31 and to the roof side rail 29 via the corner bracket 51.

As shown in Fig. 6, the corner bracket 51, which is of a plate shape, has a one-end fastening section 98 retained in face-to-face contact with the upper end portion 42 of the center pillar 31, and an other-end fastening section 101 retained in face-to-face contact with the roof arch 16.

The following describe the partitioning and reinforcing member 57, with reference to Figs. 3, 4, 9 and 10. The partitioning and reinforcing member 57 comprises the above-mentioned outer bulkhead 58, inner bulkhead 61, front bulkhead 62 and rear bulkhead 63. The outer bulkhead 58 has a generally U sectional shape defined by a pair of opposed first and second partition sections 103 and 104 and a connection section 105 interconnecting the lower ends of the first and second partition sections 103 and 104. Each of the front and rear bulkheads 62 and 63 includes a body 111 fitted with inner wall surfaces of the side wall 27 in such a manner as to partition the interior of the side wall 27.

The front seat 24 is a conventional separate-type seat which includes a driver's seat 114 and a front passenger's seat 115 provided separately from each other. As shown in Fig. 3, the front passenger's seat 115 includes a seat cushion 52 and a seat back 116 attached to the seat cushion 52. The seat cushion 52 is fixed to the underbody 68, including the front floor cross member 15, via a slide device 117.

The driver's seat 114 is constructed in generally the same manner as the front passenger's seat 115. Note that the front seat 24 may be a bench seat type where the driver's seat 114 and front passenger's seat 115 are formed integrally with each other.

Next, a description will be given about behavior of the embodiment of the side vehicle body structure, with reference to Figs. 1 and 12.

First, a description will be given about a mechanism for increasing a strength of the side vehicle body structure against a collision load caused, for example, by a lateral collision and a mechanism for absorbing such a collision impact. Whereas the following describe mainly the left side body 13, the right side body behaves similarly to the left side body 13.

As a load is input from an external obstacle or object to the center pillar 31 of the left side body 13 as indicated by arrow a1, the lower center pillar stiffener member 47 having a strength smaller than that obtainable by the die quench process starts deforming, as a starting point of deformation, ahead of the others and thereby absorb the load.

The upper center pillar stiffener member 44 extending continuously from the lower center pillar stiffener member 47 is a member (hot stamped member) obtained by the die quench (hot stamp) process. The upper center pillar stiffener member 44 has a greater tensile strength than the lower center pillar stiffener member 47 formed of high-tensile steel and hence is difficult to bend as compared to the lower center pillar stiffener member 47.

Simultaneously with deformation of the lower center pillar stiffener member 47 due to the input load, the side sill 27 transmits the external input load (arrow a1) to the one end portion 53a of the front floor cross member body 53 formed of high-tensile steel and extending inwardly from the side sill 27.

When the input load has been transmitted to the front floor cross member body 53, the front floor cross member body 53 starts deforming at the one end portion 53a and thereby absorbs the load.

Because the front floor cross member stiffener 46 fixedly joined to the front floor cross member body 53 is a member (hot stamped member) obtained by the die quench process, it has a greater tensile strength than the front floor cross member body 53 formed of high-tensile steel and hence is difficult to bend (more specifically, difficult to buckle or compressively deform) as compared to the front floor cross member body 53. Thus, the impact is absorbed by the one end portion 53a positively deforming in response to the impact.

As the load is input as indicated by arrow a1, the upper center pillar stiffener member 44 bends into the passenger compartment 22, but an amount of such bending of the upper center pillar stiffener member 44 is small. Because the upper center pillar stiffener member 44 is a member (hot stamped member) obtained by the die quench process, it has a greater tensile than high-tensile steel and hence is difficult to bend.

Further, as the load is input by arrow a1, the upper center pillar stiffener member 44 transmits the input load to the roof arch 16 extending continuously from an upper end portion of the upper center pillar stiffener member 44. The roof arch 16, to which the load has been transmitted as above, is also a hot stamped member that has a greater tensile than high-tensile steel and hence presents a small amount of compressive or buckling deformation.

Further, as a load (collision load) is input from the front of the vehicle 11 as indicated by arrow a2 (Fig. 1), the side sill 27 disperses the input load by means of the hot-stamped side sill stiffener 45, and thus, it presents a small amount of compressive or buckling deformation. The side sill stiffener 45 has a greater tensile than high-tensile steel and hence is difficult to plastically deform.

Also, the side sill 27 is difficult to plastically deform because of the provision of the front floor cross member stiffener 46 of the front floor cross member 15. Similarly, when a collision load has been input from the rear of the vehicle 11, the side sill 27 is difficult to plastically deform.

Namely, the instant embodiment of the side vehicle body structure, in which the hot stamped members, excluding the lower center pillar stiffener member 47, are disposed or arranged in an annular configuration, can significantly increase the strength of the vehicle body 12 against loads from the front, rear and left and right sides of the vehicle 11.

The lower center pillar stiffener member 47 is smaller in tensile strength than the upper center pillar stiffener member 44 and side sill stiffener 45 extending continuously from the lower center pillar stiffener member 47, and thus, as a load is input as indicated by arrow a1, the lower center pillar stiffener member 47 starts deforming toward the seat cushion section 52 of the front seat 24, i.e., starts being pressed into the passenger compartment 22.

As the lower center pillar stiffener member 47 further deforms to be further pressed into the passenger compartment 22, it deforms toward beneath the seat cushion section 52 as indicated by arrow a3.

Further, as the load is input as indicated by arrow a1, the side sill stiffener 45 deforms inwardly so that the input load is transmitted from the inner side sill member 54 to the front cross member body 53 via the partitioning and reinforcing member 57 as shown in Figs. 9 to 12. In this case, the load is not transmitted directly to the front cross member stiffener 46 spaced part from the inner side sill member 54.

The front cross member body 53, except its opposite end portions 53a and 53b, is reinforced by the front floor cross member stiffener 46 (hot stamped member). Thus, the one end portion 53a is easy to deform in response to the input load, which allows the lower center pillar stiffener member 47 to be more reliably deformed toward beneath the seat cushion section 52 as indicated by arrow a3.

As the load is input as indicated by arrow a1, the side sill 27 operates to disperse the input load from the side sill stiffener 45 to the partitioning and reinforcing member 57 (outer bulkhead 58, inner bulkhead 61, front bulkhead 62 and rear bulkhead 63), so that the instant embodiment can prevent the side sill stiffener 45 from being inwardly collapsed.

Further, because the side sill stiffener 45 transmits most of the input load to the front floor cross member 15 via the inner side sill member 54, collapsing of the end portion 53a of the front floor cross member body 53 can be promoted, as a result of which it is possible to prevent the hollow side sill 27 from being collapsed and deformed due to the input load.

Furthermore, the embodiment of the side vehicle body structure of the present invention can advantageously eliminate a need for particularly shaping the lower center pillar stiffener member 47 and the opposite end portions 53a and 53b of the front floor cross member body 53 so as to provide a starting point of deformation. In other words, the embodiment of the side vehicle body structure of the present invention can eliminate a time and labor for particularly forming a portion, such as a fragile-shape portion, notch (V shape portion), hole or opening, which produces stress concentration.

The hot stamp process can create super high-tensile-strength steel plates of 980 MPa or over. Although such super-high-tensile-strength steel plates can be applied to a vehicle body and reduce the weight of the vehicle body, it would be difficult to apply the super-high-tensile-strength steel plates to vehicle body members of complicated shapes. Thus, in the side vehicle body structure of the present invention, the high-tensile steel plates are applied only to members of relatively simple shapes, such as the roof arch, upper center pillar stiffener members, etc., and constitute an annular framework in combination with cold-pressed steel plates of about 590 Mpa. In this way, the present invention can provide a side vehicle body structure which can be manufactured at low cost and has a reduced weight and increased strength, and which can maintain an appropriate strength against frontal and lateral collisions.

The side vehicle body structure of the present invention is well suited for application to bodies of automotive vehicles, particularly four-door automotive vehicles.

Roof arch (16), upper center pillar stiffener members (44) of left and right center pillars (31), side sill stiffeners (45) of left and right side sills (27) and front floor cross member stiffener (46) are each formed by die quenching of a steel plate. Lower center pillar stiffener members (47) of left and right center pillars are each plastically formed of a steel plate having a strength smaller than a strength obtainable by die quenching of the steel plate. The front floor cross member stiffener (46), upper and lower center pillar stiffener members (44, 47) and roof arch (16) are arranged in an annular configuration, as viewed in front elevation of a vehicle compartment (22).

## Claims

1. A side vehicle body structure including left and right side bodies (13) constituting left and right walls of a passenger compartment (22),
the side vehicle body structure comprising: a front floor cross member (15) extending in a left-right direction of the vehicle to interconnect respective longitudinally-middle portions of left and right side sills (27) constituting lower end edges of the left and right side bodies, the front floor cross member (15) including a front floor cross member stiffener (46), each of the left and right side sills (27) including a side sill stiffener (45); and
a roof arch (16) extending in the left-right direction of the vehicle to interconnect upper ends of left and right center pillars (31) extending upward from the longitudinally-middle portions of the left and right side sills (27), each of the left and right center pillars (31) including a center pillar stiffener (43) having upper and lower center pillar stiffener members (44, 47), the front floor cross member stiffener (46), the upper and lower center pillar stiffener members (44, 47) of the left and right center pillars and the roof arch (16) being disposed in an annular configuration, as viewed in front elevation of the vehicle compartment (22), **characterised in that**,
the roof arch (16), the upper center pillar stiffener members (44) of the left and right center pillars (31), the side sill stiffeners (45) of the left and right side sills (27) and the front floor cross member stiffener (46) being each formed by die quenching of a steel plate,
the lower center pillar stiffener members (47) of the left and right center pillars being each plastically formed of a steel plate having a strength smaller than a strength obtainable by die quenching of the steel plate,

2. The side vehicle body structure according to claim 1, wherein each of the left and right center pillars (31) includes an upper section formed in a closed sectional shape with the upper center pillar stiffener member (44) and an inner center pillar member (48) facing the passenger compartment (22) and a lower section formed in a closed sectional shape with the lower center pillar stiffener member (47) and the inner center pillar member (48), and
the roof arch (16) is fixedly joined at opposite end portions thereof to the inner center pillar members (48) of the left and right center pillars (31) via corner brackets (51).

3. The side vehicle body structure according to claim 1 or 2, wherein, as viewed in side elevation of the vehicle, the lower center pillar stiffener member (47) of each of the left and right center pillars overlaps a seat cushion section (52) of a front seat (24) disposed within the passenger compartment (22).

4. The side vehicle body structure according to any one of claims 1 to 3, wherein the front floor cross member (15) is formed in a closed sectional shape with the front floor cross member stiffener (46) and a front floor cross member body (53), and only the front floor cross member body (53) is fixedly joined at each of opposite ends thereof to the inner side sill member (54) that defines a closed sectional shape in conjunction with the side sill stiffener (45) of a corresponding one of the left and right side sills (27), and wherein opposite ends of the front floor cross member stiffener (46) are each spaced from the inner side sill member (54) of the corresponding side sill to form a space (56) therebetween.

5. The side vehicle body structure according to any one of claims 1 to 4, which further comprises a partitioning and reinforcing member (57) provided within each of the left and right side sills (27) for partitioning and reinforcing the side sill.

## Patentansprüche

1. Eine seitliche Fahrzeugkarosseriestruktur umfassend linke und rechte Seitenkarosserieteile (13), welche linke und rechte Wände eines Fahrgastraumes (22) bilden,
wobei die seitliche Fahrzeugkarosseriestruktur umfasst: einen vorderen Bodenquerträger (15), der sich in einer links-rechts Richtung des Fahrzeuges erstreckt, um entsprechende Längsmitte-Abschnitte linker und rechter Seiten-Schweller (27) miteinander zu verbinden, die untere Endkanten der linken und rechten Seiten-karosserieteile bilden, der vordere Bodenquerträger (15) einen vorderen Bodenquerträger-Versteifer (46) umfasst, wobei jedes der linken und rechten Seiten-Schweller (27) einen Seiten-Schweller-Versteifer (45) umfasst; und
ein Dach-Bogen (16), der sich in der links-rechts Richtung des Fahrzeuges erstreckt, um obere Enden linker und rechter Mittelsäulen (31) miteinander zu verbinden, die sich aufwärts von den Längsmitte-Abschnitten der linken und rechten Seiten-Schweller (27) erstrecken, wobei jede der linken und rechten Mittelsäulen (31) einen Mittelsäulen-Versteifer (43) umfasst, der obere und untere Mittelsäulen-Versteifersteile (44, 47) aufweist,
wobei der vordere Bodenquerträger-Versteifer (46), die oberen und unteren Mittelsäulen-Versteiferteile (44, 47) der linken und rechten Mittelsäulen und der Dach-Bogen (16), wie in Vorderansicht des Fahrgastraumes (22) gesehen, in einer ringförmigen Konfiguration angeordnet sind,
**dadurch gekennzeichnet, dass**
der Dach-Bogen (16), die oberen Mittelsäulen-Versteiferteile (44) der linken und rechten Mittelsäulen (31), die Seiten-Schweller-Versteifer (45) der linken und rechten Seiten-Schweller (27) und der vordere Bodenquertäger-Versteifer (46) sind jeweils durch Formhärten einer Stahlplatte gebildet,
die unteren Mittelsäulen-Versteiferteile (47) der linken und rechten Mittelsäulen, sind jeweils plastisch aus einer Stahlplatte gebildet, die eine Stärke aufweist, die kleiner ist als eine Stärke, die durch Formhärten der Stahlplatte erhaltbar ist.

2. Die seitliche Fahrzeugkarosseriestruktur nach Anspruch 1, wobei jede der linken und rechten Mittelsäulen (31) einen oberen Abschnitt umfasst, der in einer geschlossenen Querschnittsform mit dem oberen Mittelsäulen-Versteiferteil (44) und einem inneren Mittelsäulenteil (48) gebildet ist, der dem Fahrgastraum (22) und einem unteren Abschnitt, der in einer geschlossenen Querschnittsform mit dem unteren Mittelsäulen-Versteiferteil (47) und dem inneren Mittelsäulenteil (48) gebildet ist, zugewandt ist, und
der Dach-Bogen (16) starr an davon gegenüberliegenden Endabschnitten mit dem inneren Mittelsäulenteil (48) der linken und rechten Mittelsäulen (31) über Eckhalter (51) verbunden ist.

3. Die seitliche Fahrzeugkarosseriestruktur nach Anspruch 1 oder 2, wobei, wie in Seitenansicht des Fahrzeuges gesehen, das untere Mittelsäulen-Versteiferteil (47) jede der linken und rechten Mittelsäulen einen Sitzkissen-Abschnitt (52) eines Vordersitzes (24) überlappt, der innerhalb des Fahrgastraumes (22) angeordnet ist.

4. Die seitliche Fahrzeugkarosseriestruktur nach einem der Ansprüche 1 bis 3, wobei der vordere Bodenquerträger (15) in einer geschlossenen Querschnittsform mit dem vorderen Bodenquerträger-Versteifer (46) und einem vorderen Bodenquerträgerkörper (53) gebildet ist, und nur der Bodenquerträgerkörer (53) ist starr verbunden an jeden seiner gegenüberliegenden Enden mit dem inneren Seiten-Schwellerteil (54), welches eine geschlossene Querschnittsform in Verbindung mit dem Seiten-Schweller-Versteifer (45) eines entsprechenden linken und rechten Seiten-Schwellers (27) definiert, und wobei gegenüberliegende Enden des vorderen Bodenquerträger-Versteifers (46) jeweils von dem inneren Seiten-Schwellerteil (54) des entsprechenden Seiten-Schwellers beabstandet sind, um einen Raum (56) dazwischen zu bilden.

5. Die seitliche Fahrzeugkarosseriestruktur nach einem der Ansprüche 1 bis 4, die ferner ein aufteilendes und verstärkendes Teil (57) umfasst, das innerhalb jedes der linken und rechten Seiten-Schweller (27) zum Aufteilen und Verstärken des Seiten-Schwellers vorgesehen ist.

## Revendications

1. Structure latérale de corps de véhicule comprenant des corps latéraux gauche et droit (13) constituant des parois gauche et droite d'un compartiment de passagers (22), la structure latérale de corps de véhicule comprenant : un élément transversal de plancher avant (15) s'étendant dans un sens gauche-droite du véhicule pour raccorder mutuellement des portions centrales longitudinalement respectives de bas de caisse latéraux gauche et droit (27) constituant des bordures d'extrémité inférieures des corps latéraux gauche et droit, l'élément transversal de plancher avant (15) comprenant un raidisseur d'élément transversal de plancher avant (46), chacun des bas de caisse latéraux gauche et droit (27) comprenant un raidisseur de bas de caisse latéral (45) ; et une voûte de toit (16) s'étendant dans le sens gauche-droite du véhicule pour raccorder mutuellement des extrémités supérieures des pieds milieux gauche et droit (31) s'étendant vers le haut depuis les portions centrales longitudinalement des bas de caisse latéraux gauche et droit (27), chacun des pieds milieux gauche et droit (31) comprenant un raidisseur de pied milieu (43) ayant des éléments raidisseurs de pied milieu supérieur et inférieur (44, 47), le raidisseur d'élément transversal de plancher avant (46), les éléments raidisseurs de pied milieu supérieur et inférieur (44, 47) des pieds milieux gauche et droit et la voûte de toit (16) étant disposés en configuration annulaire, vus en élévation avant du compartiment de véhicule (22), **caractérisée en ce que** la voûte de toit (16), les éléments raidisseurs de pied milieu supérieurs (44) des pieds milieux gauche et droit (31), les raidisseurs latéraux de bas de caisse (45) des bas de caisse latéraux gauche et droit (27) et le raidisseur d'élément transversal de plancher avant (46) étant formés chacun par la trempe sous forgeage à chaud d'une tôle d'acier, les éléments raidisseurs de pied milieu inférieurs (47) des pieds milieux gauche et droit étant formés chacun plastiquement d'une tôle d'acier ayant une résistance inférieure à une résistance pouvant être obtenue par trempe sous forgeage à chaud de la tôle d'acier.

2. Structure latérale de corps de véhicule selon la revendication 1, dans laquelle chacun des pieds milieux gauche et droit (31) comprend une section supérieure formée dans une forme en coupe fermée avec l'élément raidisseur de pied milieu supérieur (44) et un élément de pied milieu interne (48) faisant face au compartiment de passagers (22) et une section inférieure formée dans une forme en coupe fermée avec l'élément raidisseur de pied milieu inférieur (47) et l'élément de pied milieu interne (48), et la voûte de toit (16) est réunie fixement, à des portions d'extrémité opposées, aux éléments de pied milieu interne (48) des pieds milieux gauche et droit (31) par l'intermédiaire de supports en cornière (51).

3. Structure latérale de corps de véhicule selon la revendication 1 ou 2, dans laquelle, vu en élévation latérale du véhicule, l'élément raidisseur de pied milieu inférieur (47) de chacun des pieds milieux gauche et droit chevauche une section de coussin de siège (52) d'un siège avant (24) disposé à l'intérieur du compartiment de passagers (22).

4. Structure latérale de corps de véhicule selon l'une quelconque des revendications 1 à 3, dans laquelle l'élément transversal de plancher avant (15) est formé dans une forme en coupe fermée avec le raidisseur d'élément transversal de plancher avant (46) et un corps d'élément transversal de plancher avant (53), et uniquement le corps d'élément transversal de plancher avant (53) est réuni fixement, à chacune de ses extrémités opposées, à l'élément formant bas de caisse latéral interne (54) qui définit une forme en coupe fermée en combinaison avec le raidisseur de bas de caisse latéral (45) d'un des bas de caisse latéraux gauche et droit (27) correspondant, et dans laquelle des extrémités opposées du raidisseur d'élément transversal de plancher avant (46) sont espacées chacune de l'élément formant bas de caisse latéral interne (54) du bas de caisse latéral correspondant pour former un espace (56) entre les deux.

5. Structure latérale de corps de véhicule selon l'une quelconque des revendications 1 à 4, qui comprend en outre un élément de séparation et de renforcement (57) prévu à l'intérieur de chacun des bas de caisse latéraux gauche et droit (27) pour séparer et renforcer le bas de caisse latéral.
